# EUROPEAN PATENT SPECIFICATION

(11) **EP 0 913 902 B1**
(45) Date of publication and mention of the grant of the patent: **06.12.2006**
(21) Application number: 98115656.5
(22) Date of filing: 20.08.1998
(51) Int. Cl.: H02G 3/12

(54) **An electric box**
Elektrischer Kasten
Boîtier électrique

(30) Priority: 21.08.1997 DK 96097
(43) Date of publication of application: 06.05.1999
(73) Proprietor: Schneider Electric Danmark A/S, 2750 Ballerup (DK)
(72) Inventor: Andersen, Dennis Normann, 3550 Slangerup (DK)
(74) Representative: Holme, Edvard

(56) References cited:
- WO-A1-90/09692
- GB-A- 2 211 365

## Description

The invention concerns an electric box for electric components such as data outlets, telephone points, outlets, and switches, and of the kind which is shaped as one mainly prismatic, open box with at least one locking device placed at each of two opposite side walls, the locking device is arranged in such a way that it allows the electric box to be led into a cable channel between two opposite flanges along a front opening in this channel when said side walls are oriented towards the longitudinal direction of the channel, and can be engaged with the flanges when the electric box is in place inside the channel.

A cable channel serves to carry, support, and hide cables and wires which are normally led along a wall in a building. Electric components for supplying electric installations in a building are, at suitable places along the cable channel, connected to the cables or wires, as the components themselves are fitted into electric boxes which then are secured in the cable channel.

From a sectional view, a typical cable channel has an almost rectangular basic form with opposite flanges pointing towards the longitudinal front opening of the channel. Various methods for fastening an electric box in the cable channel are known, but a very widespread method is to quite simply fix the electric box on these flanges.

This method is economically very advantageous to use, as separate fixing means such as e.g. slides fixed in the cable channel are not required. However, it has turned out that the electric box is not always so firmly fixed on the flanges as one would want. This is due to the fact that the capability to hold the two parts so that they are not mutually displaced depends essentially on the friction between the materials of the electric box and the cable channel respectively. However, these materials are normally plastic or metal which have a relatively moderate coefficient of friction.

An electric box with the features of the preamble of claim 1 is known from GB-2 211 365 A.

The object of the invention is to show an electric box of the kind mentioned in the opening paragraph, which is arranged in such a way that it can be fixed on opposite flanges along the front opening of a cable channel with a stronger joining than known before.

The novel and unique features according to the invention, whereby this is achieved, is the fact that the engagement of the locking device with the flanges takes place by means of at least one knife belonging to the locking device with at least one cutting edge for effectively securing a mounted electric box against being displaced in relation to the cable channel.

The locking device can have fixed knives which engage with the flanges of the cable channel by, during mounting, resiliently forcing the flanges so far apart that the electric box can be led in through the enlarged front opening.

In a second embodiment, the knives can be swingably fitted on the electric box in such a way that they can be swung sufficiently inwards in the electric box, in order for this to pass through the front opening even if the opening has not been enlarged or only been enlarged a little.

In a variant of the mentioned embodiment with swingable knives, the locking device can advantageously be comprised of a locking pawl which is swingably fitted in a window in a wall of the electric box via a swing connection, placed at the bottom of the box, between the box and one end of the locking pawl, while the other free end carries the knife which then is able to swing from an internal position where the electric box easily can be led in through the front opening of the cable channel to an external position where the knife is swung so far out that it thereby is securely engaged with a part of the adjacent flange.

In order to effectively be able to engage with the flange of the cable channel, the knife can be made of a material such as metal or steel which is harder than the material of the cable channel so that the cutting edge is able to cut into this material and be locked.

In an especially simple embodiment, the knife can have at least one cutting edge for, during mounting of the electric box in the cable channel, engaging with the underside of the adjacent flange.

In an advantageous second embodiment, the knife can be comprised of one mainly U-shaped sheet spring with a bottom part and two side parts which each have at least one cutting edge for, during mounting of the electric box in the cable channel, engaging with the underside and the top side respectively of the adjacent flange so that the electric box is considerably more secure against being displaced in relation to the cable channel.

The invention will be explained in greater detail below, describing only exemplary embodiments with reference to the drawing, in which
Fig. 1 is a perspective view of a section of a cable channel with mounted electric boxes,
Fig. 2 is an enlarged perspective view of the cable channel shown in fig. 1 with one mounted electric box,
Fig. 3 is a fractional view from the side and in section of the cable channel shown in fig. 1 and 2 with a first embodiment of an electric box according to the invention at a first mounting stage,
Fig. 4 is the same but the electric box is fully mounted,
Fig. 5 is a sectional view taken along the line V - V of fig. 4.
Fig. 6 is a fractional view from the side and in section of the cable channel shown in fig. 1 and 2 with a second embodiment of the electric box according to the invention at a first mounting stage,
Fig. 7 is the same but the electric box is fully mounted,
Fig. 8 is a sectional view taken along the live VIII - VIII of fig. 7, and
Fig. 9 is a perspective view of a knife for locking the electric box shown in fig. 2, 6 - 8 in a cable channel.

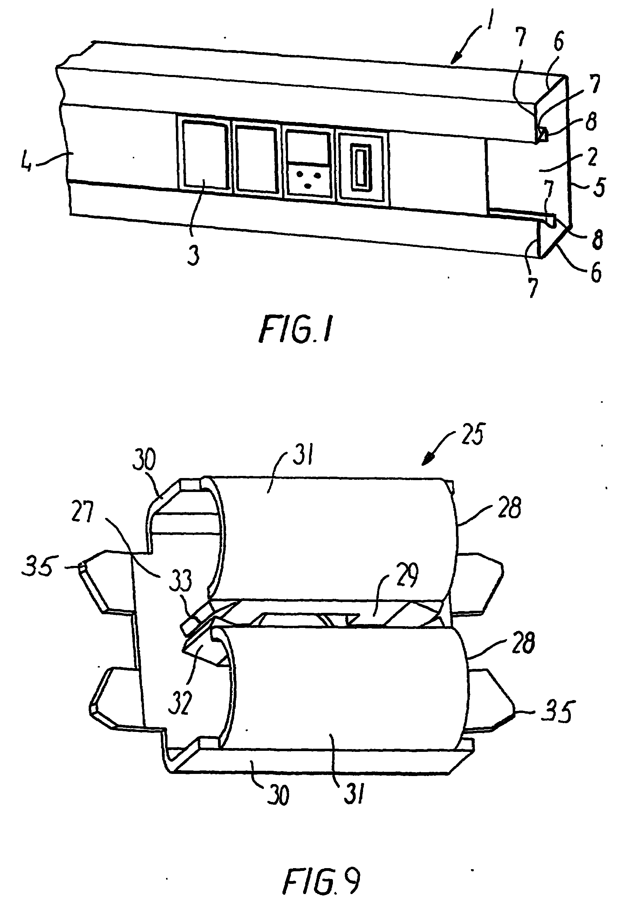

In fig. 1 is shown a cable channel 1 with a longitudinal front opening 2 in which, in this case, four electric boxes 3 are mounted. Front panels 4 cover the rest of the front opening.

From a sectional view, the cable channel 1 has an almost rectangular shape with a channel bottom 5, two channel sides 6, and two opposite front flaps 7 which from each of the sides 5 are extending towards the front opening 2 and at this opening pass into two mounting flanges 8 extending mainly crosswise of the front opening pointing towards this.

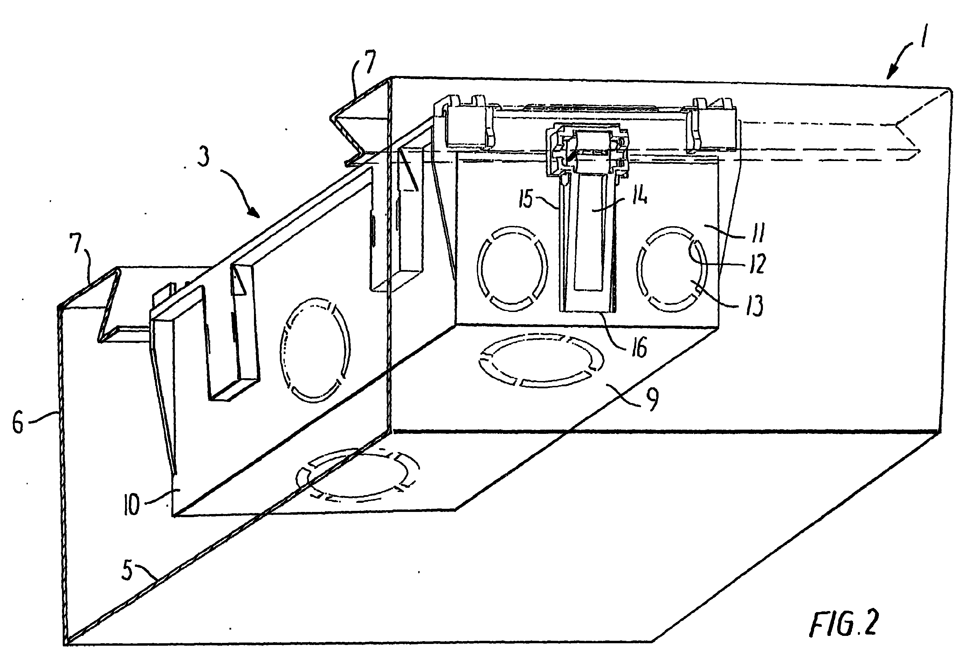

The electric box 3 shown in fig. 2 is shaped as a prismatic, open box with a box bottom 9, two opposite box sides 10, and two other opposite box sides 11. Openings 12 are made in the box sides 10 and 11 for leading the cables and wires (not shown) in the cable channel into the electric box. The openings 12 are preliminarily closed by pieces 13 which can be pushed or pressed out when the respective opening is to be used.

The cable channel 1 is mounted in a building (not shown), and the electric boxes 3 serve for taking up electric components for supplying the electric installations in this building. The electric box is in itself of a known structure and will therefore not be described in detail here.

The electric box 3 is mounted can the mounting flanges 8 of the cable channel 1 by means of locking devices placed on each of two opposite sides 11 of the box. In the embodiment examples shown, each locking device is comprised of a locking pawl 14 which is fitted in a window 15 in the wall 11 of the electric box and which can swing between an internal and external swing position respectively, via an elastic swing connection 16 at the bottom 9 of the box.

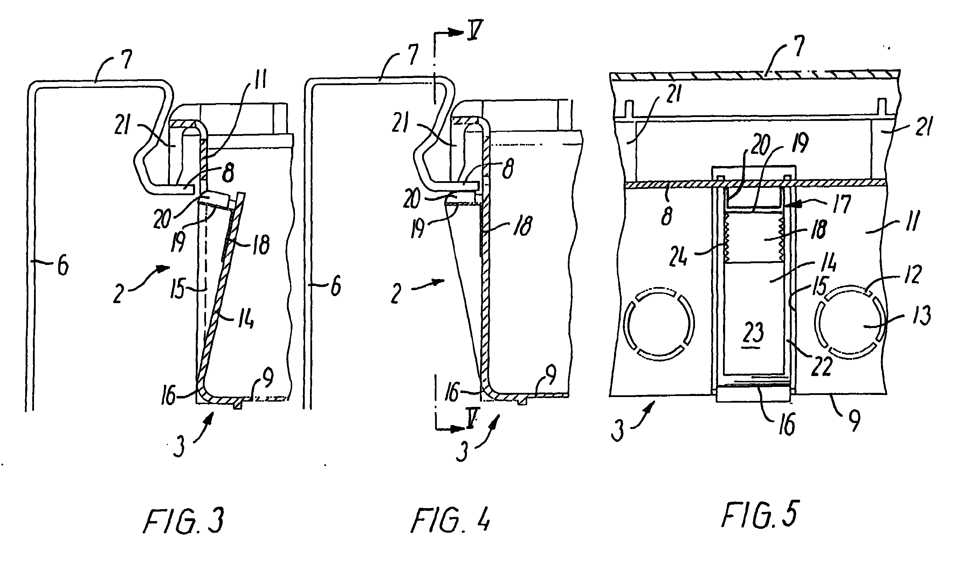

Fig. 3, 4, and 5 are fragmentarily cross-sectional views from the side of a first embodiment of a locking device according to the invention. At the top of the locking pawl 14, a knife 17 is fitted which is in the shape cf an angular bent sheet with a first flap 18 for mounting the knife on the pawl 14 and a second flap 19 with two vertical cutting edges 20.

At almost the same distance from the wall 11 as the cutting edges 20 in the external swing position of the locking pawl, a projection 21 is extending downwards from the top of the electric box on each side of the knife 17. In unmounted condition, the distance between the cutting edges 20 and the underside of the projections 21 - measured perpendicular to a line between these - is furthermore smaller than the thickness of the mounting flanges.

In fig. 3 the locking pawl 14 is in its internal swing position where the knives 17 are pulled so far back into the window 15 that the electric box 3 can be led in through the front opening 2 of the cable channel 1 until its projections 21 hit the top side of the mounting flange 8. This situation is shown in fig. 3.

In fig. 4 the locking pawl 14 is swung out of the window 15 to its external position. The cutting edge 30 of the knife 17 has thereby cut into the underside of the mounting flange 8 which forms a bridge between and is supported by the two projections 21. Contrary to the somewhat uncertain frictional connection of conventional locking devices, the cutting of the cutting edges into the flange new effectively locks the electric box against displacement in relation to the cable channel both in the longitudinal direction and transversely.

In order to properly cut into the mounting flange, a material has been chosen for the manufacture of the knives which is harder than the material of the cable channel, this material can be e.g. plastic or metal, such as painted iron. Typically, the knives are therefore made of metal, iron, steel, or spring steel.

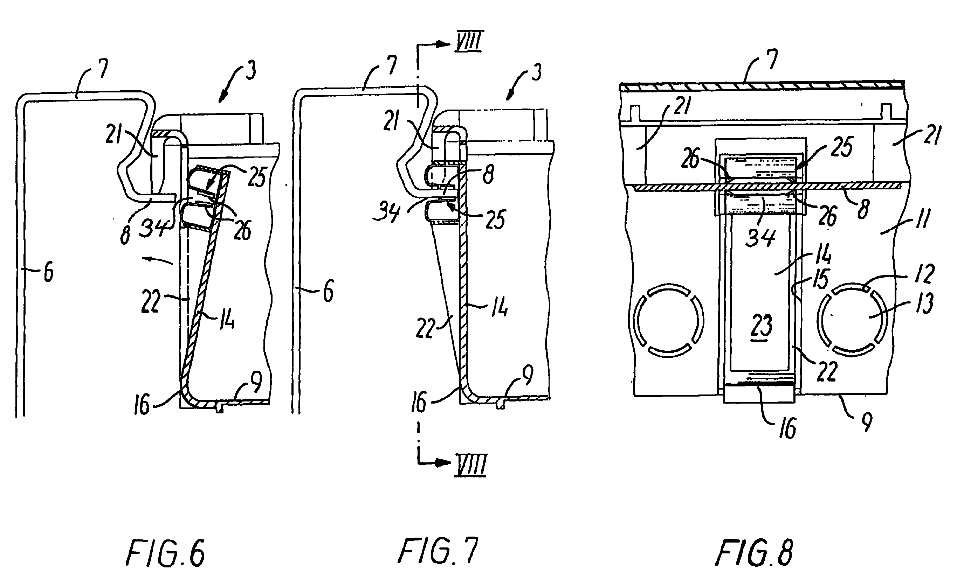

As shown in fig. 5, two longitudinal, parallel ribs 22 are made along the outer side of the locking pawl 14, the ribs delimit a groove 23 with a slightly smaller width than the first flap 18 of the knife 17. The lateral edges of this flap are furthermore provided with a number of teeth 24 for, when engaged with the sides of the ribs 22, holding the knife when it has been pushed in at the top of the groove 23 of the locking pawl.

Fig. 6, 7, and 8 are fragmentarily cross-sectional views from the side of a second embodiment of a locking device according to the invention. This structure corresponds essentially to the one shown in fig. 3, 4, and 5, and same reference numerals therefore indicate the same parts. In this case however, another knife 25 with a total of four cutting edges 26 has been used for, by means of an engagement with two cutting edges on each side of the mounting flanges 8, locking the electric box in relation to the cable channel.

The knife 25 is comprised of a punching of a relatively thin sheet. Fig. 9 shows how this punching is bent in a shape that looks almost like a C in cross-section with a bottom part 27 and two side parts 28 which each have a U-shape with an internal and external flap 29, 30 which in a blending 31 pass into each other.

An end part 32 at each end of the internal flaps 29 is inclined towards the opposite internal flap 29. The inmost edges on each of these end parts 32 form the four cutting edges 33 of the knife 25. In unmounted condition, the distance between two opposite cutting edges 33 - measured perpendicular to the flaps 29 - is furthermore smaller than the thickness of the mounting flange 8.

This second embodiment of the locking device according to the invention functions in principle in the same way as the first. Thus, in fig. 6 the locking pawl 14 is in its internal swing position whereby the electric box 3 has been able to be led into the cable channel 1 so that its projections 21 is brougth to rest on the top side of the mounting flange 8.

In fig. 7 the locking pawl 14 is now in its external swing position where the four cutting edges 26 of the knife 25 have cut into the mounting flange 8 with two in the top side and two in the underside. Thereby, the electric box is more secure from sliding in relation to the mounting flanges of the cable channel than in the first embodiment where the size of the possible penetration depth of the cutting edges depends on how far the flanges are bent outwards between their supports, i.e. the projections 21.

A particular safeness is obtained as a result of the end parts 32 extending inclined towards the mounting flanges 8 whereby a cutting edge 33 as a barb will try to cut deeper into the material of the mounting flanges when attempts are made to push the electric box along the cable channel in the direction which the cutting edge points. As the cutting edges 33 at each of the ends of their internal flaps 29 point in opposite directions, the above-mentioned, advantageous locking effect will take effect in no matter which direction the electric box will be attempted to be pushed along the cable channel

At the top of the locking pawl 14, a recess 34 for taking up the knife 25 has been made. For this purpose, the knife 25 has on each side of the bottom part 27 teeth 35 for, when engaging with the sides of the recess, holding the knife when it has been pushed into the recess.

## Claims

1. An electric box (3) for electric components such as data outlets, telephone points, outlets, and switches, and of the kind which is shaped as a mainly prismatic, open box with at least one locking device (14) placed at each of two opposite side walls (10, 11), the locking device (14) is arranged in such a way that it allows the electric box (3) to be placed in a cable channel (1) between two opposite flanges (8) along a front opening (2) in this when said side walls (10) are oriented towards the longitudinal direction of the channel (1), and to be engaged with the flanges (8) when the electric box (3) is in place inside the channel (1), **characterized in that** the engagement of the locking device (14) with the flanges (8) takes place by means of at least one knife (17) belonging to the locking device (14) with at least one cutting edge (20).

2. An electric box (3) according to claim 1, **characterized in that** the locking device (14) is swingably mounted on the electric box (3).

3. An electric box (3) according to claim 1 or 2, **characterized in that** the locking device (14) is a locking pawl (14) which is swingably mounted in a window (15) in a wall (10) of the electric box (3) via a swing connection (16), preferably placed at the bottom (9) of the box (3), between the box (3) and one end part of the locking pawl (14), and that the other free end part of the locking pawl (14) carries the at least one knife (17).

4. An electric box (3) according to claim 1, 2, or 3, **characterized in that** at least the cutting edge (20) of the knife (17) is made of a material which is harder than the surface material of the cable channel (1).

5. An electric box (3) according to each of the claims 1 - 4, **characterized in that** at least the cutting edge (20) of the knife (17) is made of metal, iron, steel, or spring steel.

6. An electric box (3) according to each of the claims 1 - 5, **characterized in that** the knife (17) has at least one cutting edge (20) which is arranged in such a way that it, during mounting of the electric box (3), engages with the underside of the adjacent flange (8).

7. An electric box (3) according to claim 6, **characterized in that** the knife (17) is comprised of an angular bent sheet with one flap (18) for mounting the knife on the locking pawl (14) and one flap (19) for carrying the cutting edge of the knife.

8. An electric box (3) according to claim 1 - 5, **characterized in that** the knife (17) is comprised of a, from a cross-sectional view, mainly C-shaped sheet spring with a bottom part (17) and two side parts (28) which each have at least one cutting edge (33) for, during mounting of the electric box (3) in the cable channel (1), engaging with the underside and the top side respectively of the adjacent flange (8).

9. An electric box (3) according to claim 8, **characterized in that** each of the side parts (28) of the sheet spring are comprised of two flaps (29, 30) which in a bending (31) pass into each other, and that cutting edges (33) of each side part (28) are formed on the flap (29, 30) nearest the second side part.

10. An electric box (3) according to claim 9, **characterized in that** the cutting edges (33) are formed by bending the ends (32) of the flaps of each side part (28) which is nearest the flap (29) of the second side part (28), inclined towards this.

11. An electric box (3) according to claim 8, 9, or 10, **characterized in that** the distance between the cutting edges (33) of the opposite flaps (29) of the two side parts (28), measured perpendicular to these, is smaller than the thickness of the flange (8), before the electric box (3) is mounted in the cable channel (1).

12. An electric box (3) according to each of the claims 8 - 11, **characterized in that** a recess (34) is formed in the locking device (14) for wedging the sheet spring tight.

## Patentansprüche

1. Eine elektrische Dose (3) für elektrische Bauteile, etwa Datensteckdose, Telefonanschluss, Steckdose und Schalter, und von der Art, die als im wesentlichen prismatische, offene Dose mit wenigstens einer Verriegelungseinrichtung (14), die an jeder der beiden gegenüberliegenden Seitenwände (10,11) angeordnet ist, ausgebildet ist, wobei die Verriegelungsseinrichtung (14) derart ausgebildet ist, dass sie ein Anordnen der elektrischen Dose (3) in einem Kabelkanal (1) in einer in diesem ausgebildeten, nach vorne weisenden Öffnung zwischen zwei gegenüberliegenden Laschen (14) erlaubt, wenn die Seitenwände (10) in Richtung zu der Längsrichtung des Kanals (1) ausgerichtet sind und die mit den Flanschen (8) in Eingriff sind, wenn die elektrische Dose (3) im Inneren des Kanals (1) platziert ist, **dadurch gekennzeichnet, dass** der Eingriff der Verriegelungseinrichtung (14) mit dem Flansch (8) mittels wenigstens einer zu der Verriegelungseinrichtung (14) gehörenden Schneide (17) mit wenigstens einer Schneidkante (20), erfolgt,

2. Eine elektrische Dose (3) nach Anspruch 1, **dadurch gekennzeichnet, dass** die Verriegelungseinrichtung (14) verschwenkbar an der elektrischen Dose (3) montiert ist.

3. Eine elektrische Dose (3) nach Anspruch 1 oder 2, **dadurch gekennzeichnet, dass** die Verriegelungseinheit (14) eine Verriegelungsklinke (14) ist, die verschwenkbar in einem Fenster (15) in einer Wandung (10) der elektrischen Dose (3) über eine, vorzugsweise an dem Boden der Dose (3) zwischen der Dose (3) und einem Endteil der Verriegelungsklinke (14) platzierten Schwenkverbindung (16) montiert ist und dass das andere freie Endteil der Verriegelungsklinke (14) die wenigstens eine Schneide (17) trägt.

4. Eine elektrische Dose (3) nach Anspruch 1, 2 oder 3, **dadurch gekennzeichnet, dass** wenigstens die Schneidkante (20) der Schneide (17) aus einem Material besteht, das härter als das Oberflächenmaterial des Kabelkanals (1) ist.

5. Eine elektrische Dose (3) nach einem der Ansprüche 1 - 4, **dadurch gekennzeichnet, dass** wenigstens die Schneidkante (20) der Schneide (17) aus Metall, Eisen, Stahl oder Federstahl besteht.

6. Eine elektrische Dose (3) nach einem der Ansprüche 1- 5, **dadurch gekennzeichnet, dass** die Schneide (17) wenigstens eine Schneidkante (20) hat, die derart angeordnet ist, dass es während der Bewegung der elektrischen Dose (3) mit der Unterseite des benachbarten Flansches (8) in Eingriff kommt.

7. Eine elektrische Dose (3) nach Anspruch 6, **dadurch gekennzeichnet, dass** die Schneide aus einem winklig umgebogenen Blatt mit einer Lasche (18) zum Befestigen des Messers auf der Verriegelungsklinke (14) und einer Lasche (19) zum Tragen der Schneidkante der Schneide besteht.

8. Eine elektrische Dose (3) nach einem der Ansprüche 1-5, **dadurch gekennzeichnet, dass** das Messer (17) aus einem in einer Querschnittsansicht im wesentlichen C-förmigen Blattfeder mit einem Bodenteil (17) und zwei Seitenteilen (28) besteht, die wenigstens eine Schneidkante (33) haben, um während der Bewegung der elektrischen Dose (3) in dem Kabelkanal (1) mit der Unterseite bzw. der Oberseite des benachbarten Flansches in Eingriff kommen.

9. Eine elektrische Dose (3) nach einem der Ansprüche 8, **dadurch gekennzeichnet, dass** die beiden Seitenteile (28) der Blattfeder aus zwei Laschen (29, 30) bestehen, die in einer Biegung (31) ineinander verlaufen und dass die Schneidkante (33) jedes Seitenteiles (28) auf einer Lasche (29, 30), die dem zweiten Teil am nächsten ist, ausgebildet sind.

10. Eine elektrische Dose (3) nach Anspruch 5, **dadurch gekennzeichnet, dass** die Schneidkanten (33) durch Biegen der Enden (32) der Laschen jedes Seitenteils (28), die der Lasche (29) des zweiten Teils (28) am nächsten sind, gebildet sind, zu diesem geneigt.

11. Eine elektrische Dose (3) nach einem der Ansprüche 8,9 oder 10, **dadurch gekennzeichnet, dass** der Abstand zwischen den Schneidkanten (33) der gegenüberliegenden Laschen (29) der beiden Seitenteile (28) senkrecht zu diesen gemessen kleiner ist als die Dicke des Flansches, bevor die elektrische Dose (3) den Kabelkanal (1) montiert ist.

12. Eine elektrische Dose (3) nach einem der Ansprüche 8 - 11, **dadurch gekennzeichnet, dass** eine Ausnehmung (34) in der Verriegelungseinrichtung (14) zum festen Verkeilen der Blattfeder.

## Revendications

1. Boîtier électrique (3) pour des composants électriques tels que des sorties de données, des prises de téléphone, des sorties et des commutateurs, et du genre façonné sous forme d'un boîtier ouvert globalement prismatique, comportant au moins un dispositif de verrouillage (14) placé à chacune des deux parois latérales opposées (10, 11), le dispositif de verrouillage (14) étant agencé de telle façon qu'il permette le placement du boîtier électrique (3) dans une gaine pour câbles (1), entre deux brides opposées (8) le long d'une ouverture faciale (2) dans cette gaine, quand lesdites parois (10) sont orientées vers la direction longitudinale de la gaine (1), et pour s'engager grâce aux brides (8) quand le boîtier électrique (3) est en place à l'intérieur de la gaine (1), **caractérisé en ce que** l'engagement du dispositif de verrouillage (14) avec les brides (8) se produit grâce à au moins un couteau (17) faisant partie du dispositif de verrouillage (14) et comportant au moins un bord tranchant (20).

2. Boîtier électrique (3) selon la revendication 1, **caractérisé en ce que** le dispositif de verrouillage (14) est monté à bascule sur le boîtier électrique (3).

3. Boîtier électrique (3) selon la revendication 1 ou 2, **caractérisé en ce que** le dispositif de verrouillage (14) est un cliquet de verrouillage (14) monté à bascule dans une fenêtre (15) d'une paroi (10) du boîtier électrique (3) par l'intermédiaire d'une connexion à bascule (16), placée de préférence au fond (9) du boîtier (3), entre le boîtier (3) et une partie d'extrémité du cliquet de verrouillage (14), et **en ce que** l'autre partie d'extrémité libre du cliquet de verrouillage (14) porte le au moins un couteau (17).

4. Boîtier électrique (3) selon la revendication 1, 2 ou 3, **caractérisé en ce qu'**au moins le bord tranchant (20) du couteau (17) est constitué d'un matériau plus dur que le matériau de surface de la gaine pour câbles (1).

5. Boîtier électrique (3) selon chacune des revendications 1 à 4, **caractérisé en ce qu'**au moins le bord tranchant (20) du couteau (17) est fait d'un métal, de fer, d'acier ou d'acier pour ressorts.

6. Boîtier électrique (3) selon chacune des revendications 1 à 5, **caractérisé en ce que** le couteau (17) comporte au moins un bord tranchant (20) agencé de manière à ce qu'au cours du montage du boîtier électrique (3), il s'engage dans le côté inférieur de la bride adjacente (8).

7. Boîtier électrique (3) selon la revendication 6, **caractérisé en ce que** le couteau (17) comprend une pièce courbée suivant un certain angle et dotée d'une patte (18), afin de monter le couteau sur le cliquet de verrouillage (14), et d'une patte (19) permettant de tenir le bord tranchant du couteau.

8. Boîtier électrique (3) selon l'une quelconque des revendications 1 à 5, **caractérisé en ce que** le couteau (17) comprend une pièce formant ressort en forme de C globalement, vue en coupe transversale, dont une partie inférieure (17) et deux parties latérales (28) comportent chacune au moins un bord tranchant (33) permettant l'engagement respectif avec le côté inférieur et le côté supérieur de la bride adjacente (8) pendant le montage du boîtier électrique (3) dans la gaine pour câbles (1).

9. Boîtier électrique (3) selon la revendication 8, **caractérisé en ce que** chacune des parties latérales (28) de la pièce formant ressort comprennent deux pattes (29, 30) qui se chevauchent dans une courbure (31), et **en ce que** les bords tranchants (33) de chaque partie latérale (28) sont formés sur la patte (29, 30) la plus proche de la deuxième partie latérale.

10. Boîtier électrique (3) selon la revendication 9, **caractérisé en ce que** les bords tranchants (33) sont formés par le fait de courber les extrémités (32) des pattes de chaque partie latérale (28) la plus proche de la patte (29) de la deuxième partie latérale (28) inclinée vers elle.

11. Boîtier électrique (3) selon la revendication 8, 9 ou 10, **caractérisé en ce que** la distance entre les bords tranchants (33) des pattes opposées (29) des deux parties latérales (28), mesurée perpendiculairement à ceux-ci, est inférieure à l'épaisseur de la bride (8) avant que le boîtier électrique (3) ne soit monté dans la gaine pour câbles (1).

12. Boîtier électrique (3) selon chacune des revendications 8 à 11, **caractérisé en ce qu'**un évidement (34) est pratiqué dans le dispositif de verrouillage (14) afin de caler par serrage la pièce formant ressort
